# EUROPEAN PATENT APPLICATION

(11) **EP 3 722 667 A1**
(43) Date of publication of application: **14.10.2020**
(21) Application number: 20168796.9
(22) Date of filing: 08.04.2020
(51) Int. Cl.: F21V 15/01, F21V 17/10, F21V 17/12

(54) **CONNECTION STRUCTURE OF FRAME ASSEMBLY AND COVER AND ASSEMBLY METHOD THEREOF**

(30) Priority: 12.04.2019 CN 201910293916
(71) Applicant: Ningbo Ganpe Optoelectronics Co., Ltd., Ningbo, Zhejiang 315153 (CN)
(72) Inventor: WU, Minjie, Ningbo, Zhejiang 315153 (CN); XU, Guangrong, Ningbo, Zhejiang 315153 (CN); YU, Xiangjun, Ningbo, Zhejiang 315153 (CN); WANG, Huadong, Ningbo, Zhejiang 315153 (CN)
(74) Representative: Patentanwälte Gierlich & Pischitzis Partnerschaft mbB

(57) **Abstract**

The invention discloses a connection structure of a frame assembly and a cover (100). When assembling the cover (100) and the frame assembly, only the two side edges (110, 120) of the cover (100) are respectively fitted into first slots (250) of the two side frames (210, 220) of the frame (200) and the two top edges (130, 140) of the cover are respectively fitted into second slots (260) of the two top frames (230, 240) of the frame (200), and then the cover (100) and the frame (200) can be snap-fitted. Finally the cover (100) and the beam (300) can be fixed by screws to complete the connection of the frame assembly and the cover (100). The invention makes the connection structure of the frame assembly and the cover plate simple and convenient to assemble. The connection structure between the cover and the frame assembly is simplified, and it is more convenient to assemble the cover and the frame assembly.

## Description

### Technical field

The invention relates to a connection structure of a frame assembly and a cover and a method of assembling the frame assembly and the cover.

### Background

The LED panel lamp generally comprises a frame assembly, a lampshade and a cover. The frame assembly comprises a frame and a beam. The lamp shade is fixedly secured on the front surface of the frame assembly. The cover is fixedly secured on the back of the frame assembly. A light module, a power module and a control module are disposed between the lampshade and the cover.

At present, when the cover is assembled to the frame assembly, screw holes are generally formed on the cover. The screw holes are spaced along the edge of the cover. The number of screw holes is large. The screw holes are drilled correspondingly on the frame of the frame assembly. Then the cover is fixed to the frame with screws. Therefore, when assembling the frame assembly and the cover, a larger number of screw holes are required on the frame of the frame assembly and the cover and the screws should be screwed into the screw holes one by one. This makes the assembly of the frame assembly and the cover even more troublesome.

### Summary

The technical problem to be solved by the present invention is to provide a connection structure of a frame assembly and a cover, which makes the connection structure of the frame assembly and the cover easier to assemble.

In order to solve the above technical problem, the present invention provides a connection structure of a frame assembly and a cover, and the frame assembly includes: a frame comprising two oppositely disposed side frames and two oppositely disposed top frames; and at least one beam, the two ends of the beam being respectively connected to the two side frames. The cover includes two oppositely disposed side edges and two oppositely disposed top edges, and the two side frames of the frame each has a first slot extending along the length direction of the side frame, and the two side edges of the cover are respectively engaged in the two first slots.

In a preferred embodiment, one of the top frames of the frame has a second slot extending along the length of the top frame, and one of the top edges of the cover is snapped in the second slot.

In a preferred embodiment, the two top frames of the frame each has a second slot extending along the length of the top frame, and the two top edges of the cover are respectively snapped into the two second slots.

In a preferred embodiment, each of the two ends of the beam is fixedly connected with a connecting plate, and the two connecting plates on each of the beams are respectively fastened to opposite side faces of the two side frames by fastening bolts. In a preferred embodiment, the two side frames have hollow grooves extending along the length direction of the side frames, and the front end of a screw portion of each fastening bolt is located in the hollow groove of the corresponding side frame.

In a preferred embodiment, a spacer is disposed between the two connecting plates on each of the beams and the corresponding side frames, and each fastening bolt passes through the corresponding spacer.

In a preferred embodiment, each spacer has an extension extending below the beam.

In order to solve the above technical problem, the present invention also provides a method of assembling a frame assembly and a cover. The two side frames of the frame are respectively a first side frame and a second side frame, and the two side edges of the cover are respectively a first side edge and a second side edge. The assembly method comprises: mounting at least one beam on the frame to form a complete frame assembly; inserting the first side edge of the cover obliquely into the first slot of the first side frame so that the cover is inclined towards the beam in a direction from the second side edge to the first side edge; pressing the cover toward the beam so that the cover is placed on the beam, and the second side edge of the cover is aligned with the first slot of the second side frame; moving the cover toward the second side frame, so that the second side edge of the cover is located in the first slot of the second side frame, and the first side edge of the cover is also located in the first slot of the first side frame; and securing the cover and the beam with fasteners.

In order to solve the above technical problem, the present invention further provides a method of assembling a frame assembly and a cover. The two side frames of the frame are respectively a first side frame and a second side frame, the two top frames of the frame are a first top frame and a second top frame, the two side edges of the cover are respectively a first side edge and a second side edge, and the two top edges of the cover are respectively a first top edge and a second top edge. The assembly method comprises: opening a gap at a joint between the first side edge and the first top edge of the cover; mounting at least one beam on the frame to form a complete frame assembly; inserting the first side edge of the cover obliquely into the first slot of the first side frame so that the cover is inclined towards the beam in a direction from the second side edge to the first side edge, and the first top edge of the cover is located above the first top frame; pressing the cover toward the beam, so that the second top edge of the cover is aligned with the second slot of the second top frame, and the first top edge of the cover is located above the first top frame; moving the cover in a direction close to the second top frame, so that the second top edge of the cover is located in the second slot of the second top frame, the first top edge of the cover falls to the first top frame, the first top edge of the cover is aligned with the second slot of the first top frame, and the second side edge of the cover is aligned with the first slot of the second side frame; moving the cover in a direction close to the first top frame, such that the first top edge of the cover is located in the second slot of the first top frame, and the second top edge of the cover is also located in the second slot of the second top frame; moving the cover toward the second side frame, so that the second side edge of the cover is located in the first slot of the second side frame, and the first side edge of the cover is also located in the first slot of the first side frame; and securing the cover and the beam with fasteners.

By the above structure, the present invention has the following advantages compared with the prior arts:
In the present invention, when assembling the cover and the frame assembly, it is only required that the two side edges of the cover be respectively engaged into the first slots of the two side frames of the frame, and the two top edges of the cover be affixed to the second slots of the two top frames of the frame, and then the cover and the frame would be fixed together. After that, the cover and the beam are fixed by screws to complete the assembly of the cover and the frame assembly. Compared with the prior art, the invention does not need to fix the cover and the frame by screws, so that the connection structure between the cover and the frame assembly is simplified, and it is more convenient to assemble the cover and the frame assembly.

### Brief Description of the Drawings

Figure 1 is an assembled view of the frame assembly and the cover;
Figure 2 is an exploded view of the frame assembly and the cover;
Figure 3 is an enlarged view of an area A in Figure 2;
Figure 4 is an enlarged view of an area B of Figure 2;
Figure 5 is an exploded view of the beam when it is connected to the frame;
Figure 6 is an assembled view of the beam when it is connected to the frame;
Figures 7 to 9 are procedure steps of the assembling method of a first embodiment;
Figures 10 to 15 are procedure steps of the assembly method of a second embodiment.

### Detailed Description

The invention will now be described in further detail with reference to the drawings and specific embodiments.

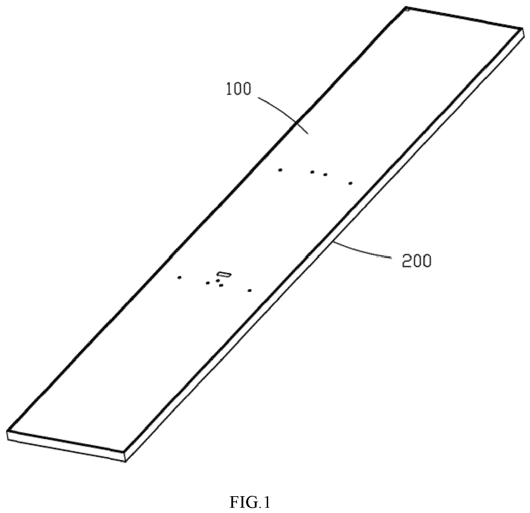

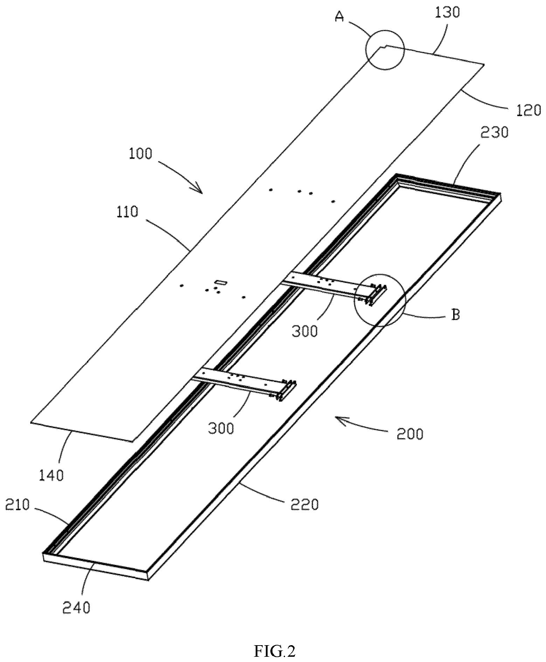

With reference taken to FIG. 1 and 2, in the connection structure of the frame assembly and the cover 100 of the present embodiment, the frame assembly includes a frame 200 and two beams 300. The frame 200 includes two opposite side frames and two opposite top frames. The two side frames are respectively a first side frame 210 and a second side frame 220, and the two top frames are respectively a first top frame 230 and a second top frame 240. Both ends of the two beams 300 are respectively connected to the first side frame 210 and the second side frame 220. The cover 100 includes two oppositely disposed side edges and two oppositely disposed top edges. The two side edges of the cover 100 are a first side edge 110 and a second side edge 120, respectively. The two top edges of the cover 100 are respectively a first top edge 130 and the second top edge 140.

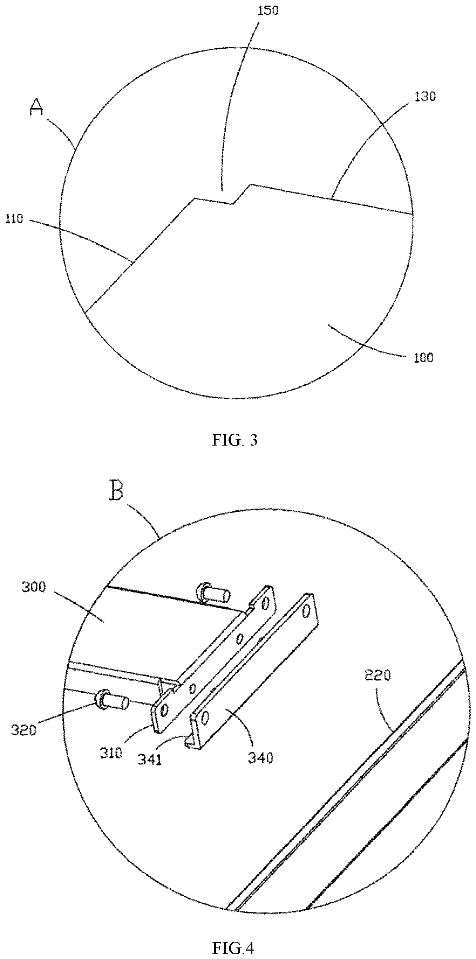

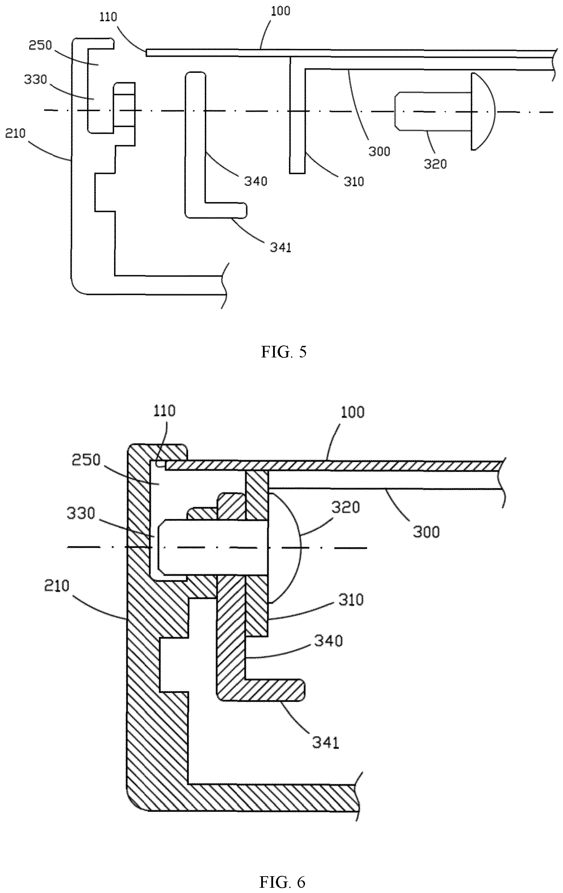

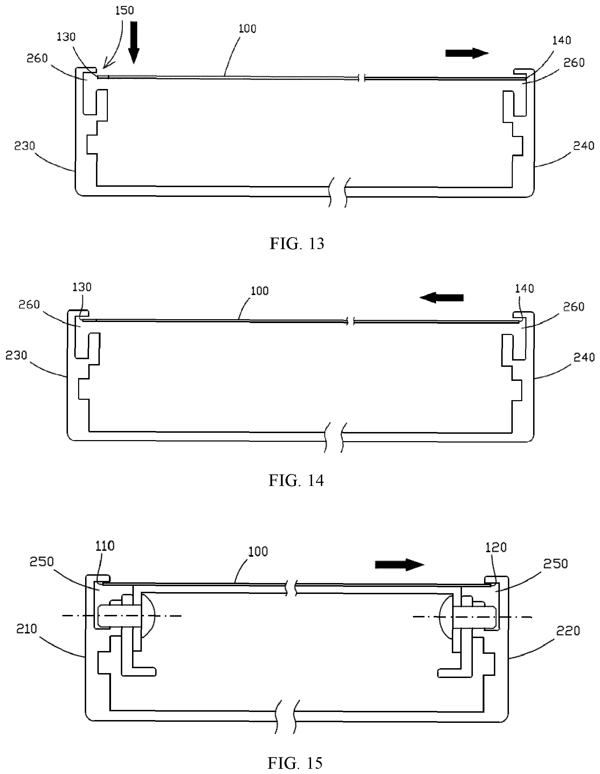

Referring to FIG. 5, FIG. 6, and FIG. 15, a first slot 250 is disposed on each of the first side frame 210 and the second side frame 220. The first slot 250 on the first side frame 210 is located on the inner side wall of the first side frame 210. The first slot 250 on the first side frame 210 extends along the length of the first side frame 210. The first slot 250 on the second side frame 220 is located on the inner side wall of the second side frame 220. The first slot 250 on the second side frame 220 extends along the length of the second side frame 220. The first side edge 110 of the cover 100 is engaged in the first slot 250 of the first side frame 210. The second side edge 120 of the cover 100 is engaged in the second slot 250 of the second side frame 220. Referring to FIG. 14, a second slot 260 is disposed on each of the first top frame 230 and the second top frame 240 of the frame 200. The second slot 260 on the first top frame 230 is located on the inner side wall of the first top frame 230. The second slot 260 of the first top frame 230 extends along the length of the first top frame 230. The second slot 260 of the second top frame 240 is located on the inner side wall of the second top frame 240. The second slot 260 of the second top frame 240 extends along the length of the second top frame 240. The first top edge 130 of the cover 100 is snapped in the second slot 260 of the first top frame 230. The second top edge 140 of the cover 100 is snapped into the second slot 260 of the second top frame 240. Referring to FIG. 4, FIG. 5, FIG. 6, and FIG. 15, a connecting plate 310 is fixedly connected to each end of each beam 300, and two connecting plates 310 on each beam are respectively locked and fixed by two fastening bolts 320 onto the inner side walls of the first side frame 210 and the second side frame 220, such that the fastening bolts 320 are screwed onto the inner side walls of the first side frame 210 and the second side frame 220. Compared to the prior art which uses screws to fix the beam 300 to the top of the frame 200, the structure in the present invention can reduce the thickness of the first side frame 210, the second side frame 220, the first top frame 230, and the second top frame 240 of the frame. If it is needed to fix the beam 300 to the top of the frame 200 by screws, it is necessary to make screw holes on the top of the first side frame 210, the second side frame 220, the first top frame 230 and the second top frame 240 of the frame 200. In order to allow the drilling of holes, the thickness of the first side frame 210, the second side frame 220, the first top frame 230, and the second top frame 240 of the frame 200 need to be thicker, while only the inner side walls of the first side frame 210, the second side frame 220, the first top frame 230, and the second top frame 240 need to be perforated in the above structure of the present invention. The thickness requirements of the first side frame 210, the second side frame 220, the first top frame 230, and the second top frame 240 of the frame 200 are released. The thickness of the first side frame 210, the second side frame 220, the first top frame 230, and the second top frame 240 of the frame 200 can be made smaller as a result.

The first side frame 210 is provided with a hollow groove 330 extending along the longitudinal direction of the first side frame 210. The second side frame 220 is also provided with a hollow groove 330 extending along the longitudinal direction of the second side frame 220. The front end of the screw portion of each of the fastening bolts 320 is located in the hollow groove 330 of a corresponding one of the first side frame 210 and the second side frame 220. Thus, the hollow groove 330 formed on the first side frame 210 and the second side frame 220 may reduce the materials used for the first side frame 210 and the second side frame 220 as well as the weight.

A spacer 340 is disposed between the two connecting plates 310 on each of the beams 300 and a corresponding one of the first side frame 210 and the second side frame 220. Each fastening bolt 320 passes through a corresponding spacer 340. Each of the spacers 340 has an extension 341 extending below the beam 300. In this way, the extension 341 can protect the beam 300. When the fastening bolt 320 falls off and causes the beam 300 to fall, the beam 300 will fall on the extension 341 of the spacer 340, and the beam 300 can be prevented from falling.

The assembly method of the above frame assembly and the cover includes the following two embodiments:

### Embodiment 1

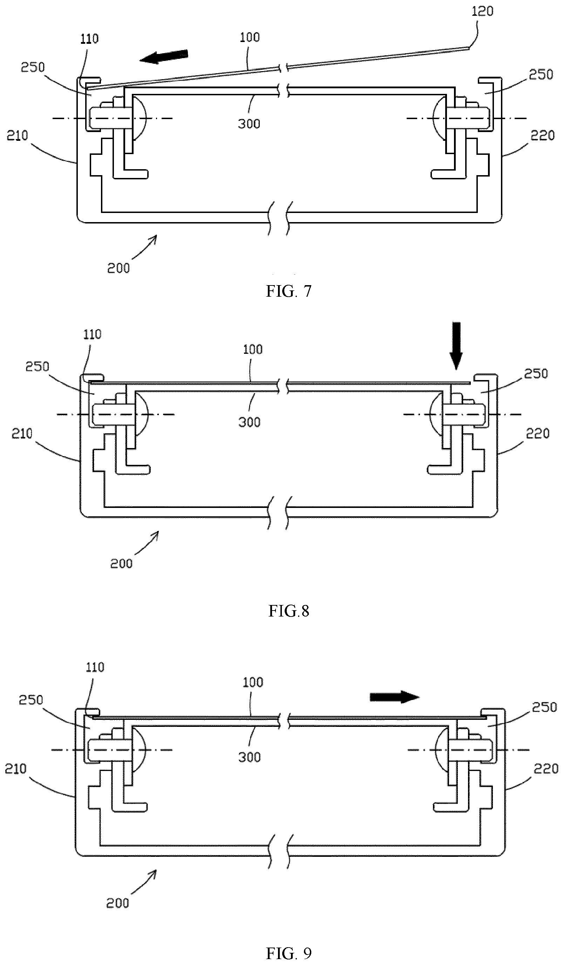

The method for assembling the frame assembly and the cover of the embodiment includes:
mounting the two beams 300 on the frame 200 to form a complete frame assembly; inserting the first side edge 110 of the cover 100 obliquely into the first slot 250 of the first side frame 210 so that the cover 100 is inclined towards the beam 300 in a direction from the second side edge 120 to the first side edge 110 as shown in FIG.7 which illustrates the state of the workpiece;
pressing the cover 100 toward the beam 300 so that the cover 100 is placed on the beam 300, and the second side edge 120 of the cover 100 is aligned with the first slot 250 of the second side frame 220 as shown in FIG.8 which illustrates the state of the workpiece;
moving the cover 100 toward the second side frame 220, so that the second side edge 120 of the cover 100 is located in the first slot 250 of the second side frame 220, and the first side edge 110 of the cover 100 is also located in the first slot 250 of the first side frame 210 as shown in FIG.9, which illustrates that the first side edge 110 of the cover 100 is snapped in the first slot 250 of the first side frame 210 ,and the second side 120 of the cover 100 is snapped in the first slot 250 of the second side frame 220; and
securing the cover 100 and the beam 300 with fasteners to complete the connection of the frame assembly and the cover.

### Embodiment 2

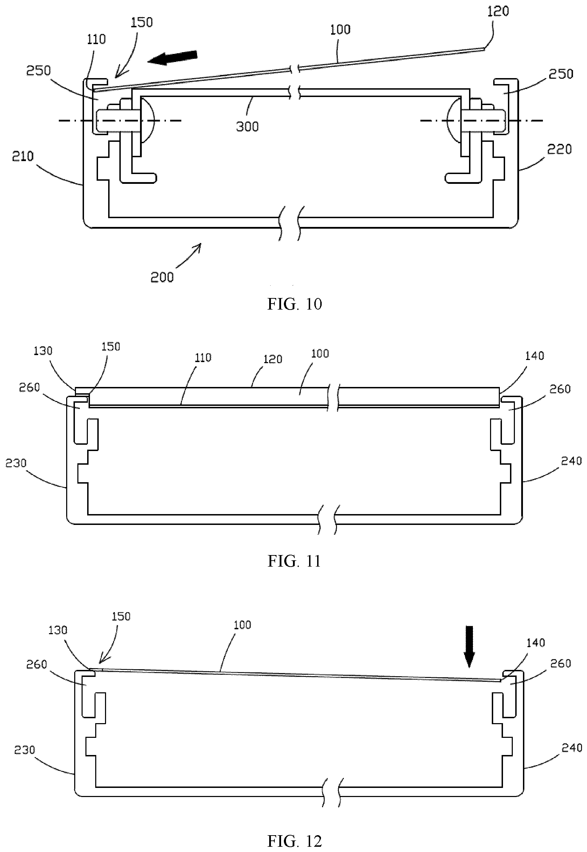

The method for assembling the frame assembly and the cover of the embodiment includes:
opening a gap 150 at a joint between the first side edge 110 and the first top edge 130 of the cover 100 as shown in FIG.3;
mounting two beams 300 on the frame 200 to form a complete frame assembly; inserting the first side edge 110 of the cover 100 obliquely into the first slot 250 of the first side frame 210 so that the cover 100 is inclined towards the beam in a direction from the second side edge 120 to the first side edge 110, and the first top edge 130 of the cover 100 is located above the first top frame 230 as shown in FIG.10-11;
pressing the cover 100 toward the beam 300, so that the second top edge 140 of the cover 100 is aligned with the second slot 260 of the second top frame 240, and the first top edge 130 of the cover 100 is located above the first top frame 230 as shown in FIG.12 in which the cover 100 is placed upon and supported by the beam 300;
moving the cover 100 in a direction close to the second top frame 240, so that the second top edge 140 of the cover 100 is located in the second slot 260 of the second top frame 240, the first top edge 130 of the cover 100 falls to the first top frame 230 as the cover 100 moves, the first top edge 130 of the cover 100 is aligned with the second slot 260 of the first top frame 230, and the second side edge 120 of the cover 100 is aligned with the first slot 250 of the second side frame 220 as shown in FIG. 13; moving the cover 100 in a direction close to the first top frame 230, such that the first top edge 130 of the cover 100 is located in the second slot 260 of the first top frame 230, and the second top edge 140 of the cover 100 is also located in the second slot 260 of the second top frame 240 as shown in FIG.14 which illustrates the first top edge 130 of the cover 100 is snapped in the second slot 260 of the first top frame 230, and the second top edge 140 of the cover 100 is snapped in the second slot 260 of the second top frame 240.;
moving the cover 100 toward the second side frame 220, so that the second side edge 120 of the cover 100 is located in the first slot 250 of the second side frame 220, and the first side edge 110 of the cover 100 is also located in the first slot 250 of the first side frame 210 as shown in FIG.15 which illustrates the first side edge 110 of the cover 100 is snapped in the first slot 250 of the first side frame 210, and the second side edge 120 of the cover 100 is snapped in the first slot 250 of the second side frame 220; and
securing the cover 100 and the two beams 300 with fasteners to complete the connection of the frame assembly and the cover.

The above description is only for the preferred embodiment of the invention, but it is not to be construed as limiting the scope of the invention. The structure of the invention may have other variations and is not limited to the above structure. All changes made within the scope of the invention as defined in the appended claims are intended to be within the scope of the invention.

## Claims

1. A connection structure of a frame assembly and a cover, the frame assembly comprising:
a frame comprising two oppositely disposed side frames and two oppositely disposed top frames; and
at least one beam, the two ends of the beam being respectively connected to the two side frames, wherein
the cover includes two oppositely disposed side edges and two oppositely disposed top edges, and
the two side frames of the frame each has a first slot extending along the length direction of the side frame, and the two side edges of the cover are respectively engaged in the two first slots.

2. The connection structure of the frame assembly and the cover according to claim 1, wherein one of the top frames of the frame has a second slot extending along the length of the top frame, and one of the top edges of the cover is snapped in the second slot.

3. The connection structure of the frame assembly and the cover according to claim 1, wherein the two top frames of the frame each has a second slot extending along the length of the top frame, and the two top edges of the cover are respectively snapped into the two second slots.

4. The connection structure of the frame assembly and the cover according to claim 1 or 2 or 3, wherein each of the two ends of the beam is fixedly connected with a connecting plate, and the two connecting plates on each of the beams are respectively fastened to opposite side faces of the two side frames by fastening bolts.

5. The connection structure of the frame assembly and the cover according to claim 4, wherein the two side frames have hollow grooves extending along the length direction of the side frames, and the front end of a screw portion of each fastening bolt is located in the hollow groove of the corresponding side frame.

6. The connection structure of the frame assembly and the cover according to claim 5, wherein a spacer is disposed between the two connecting plates on each of the beams and the corresponding side frames, and each fastening bolt passes through the corresponding spacer.

7. The connection structure of the frame assembly and the cover according to claim 6, wherein each spacer has an extension extending below the beam.

8. A method of assembling a frame assembly and a cover according to the connection structure of claim 1, wherein the two side frames of the frame are respectively a first side frame and a second side frame, and the two side edges of the cover are respectively a first side edge and a second side edge, wherein the assembly method comprises:
mounting at least one beam on the frame to form a complete frame assembly;
inserting the first side edge of the cover obliquely into the first slot of the first side frame so that the cover is inclined towards the beam in a direction from the second side edge to the first side edge;
pressing the cover toward the beam so that the cover is placed on the beam and the second side edge of the cover is aligned with the first slot of the second side frame;
moving the cover toward the second side frame, so that the second side edge of the cover is located in the first slot of the second side frame, and the first side edge of the cover is also located in the first slot of the first side frame; and
securing the cover and the beam with fasteners.

9. A method of assembling a frame assembly and a cover according to the connection structure of claim 3, wherein the two side frames of the frame are respectively a first side frame and a second side frame, the two top frames of the frame are a first top frame and a second top frame, the two side edges of the cover are respectively a first side edge and a second side edge, and the two top edges of the cover are respectively a first top edge and a second top edge, wherein the assembly method comprises:
opening a gap at a joint between the first side edge and the first top edge of the cover;
mounting at least one beam on the frame to form a complete frame assembly;
inserting the first side edge of the cover obliquely into the first slot of the first side frame so that the cover is inclined towards the beam in a direction from the second side edge to the first side edge, and the first top edge of the cover is located above the first top frame;
pressing the cover toward the beam, so that the second top edge of the cover is aligned with the second slot of the second top frame, and the first top edge of the cover is located above the first top frame;
moving the cover in a direction close to the second top frame, so that the second top edge of the cover is located in the second slot of the second top frame, the first top edge of the cover falls to the first top frame, the first top edge of the cover is aligned with the second slot of the first top frame, and the second side edge of the cover is aligned with the first slot of the second side frame;
moving the cover in a direction close to the first top frame, such that the first top edge of the cover is located in the second slot of the first top frame, and the second top edge of the cover is also located in the second slot of the second top frame;
moving the cover toward the second side frame, so that the second side edge of the cover is located in the first slot of the second side frame, and the first side edge of the cover is also located in the first slot of the first side frame; and
securing the cover and the beam with fasteners.
